# EUROPEAN PATENT APPLICATION

(11) **EP 2 421 235 A1**
(43) Date of publication of application: **22.02.2012**
(21) Application number: 10173495.2
(22) Date of filing: 20.08.2010
(51) Int. Cl.: H04M 1/725, H04M 1/2745, G06F 3/14

(54) **Method and apparatus for controlling output devices**

(71) Applicant: Research in Motion Limited, Waterloo, Ontario N2L 3W8 (CA)
(72) Inventor: Griffin, Jason, Tyler, Waterloo Ontario N2L 3W8 (CA)
(74) Representative: MERH-IP Matias Erny Reichl Hoffmann

(57) **Abstract**

According to embodiments described in the specification, a method and apparatus for controlling output devices is provided. The method comprises maintaining, in a memory of the mobile electronic device, a plurality of applications; providing, on a first display of the mobile electronic device, an input interface comprising at least one icon associated with a corresponding one of the plurality of applications; and providing, on a second display of the mobile electronic device, a preview interface comprising a first preview of a first one of the applications.

## Description

### FIELD

The specification relates generally to output devices, and specifically to a method and apparatus for controlling output devices of a mobile electronic device.

### BACKGROUND

The computational capabilities of mobile electronic devices (such as cellular phones, smart phones and the like) continue to grow, enabling such devices to perform increasingly numerous and complex tasks. The resources of these devices (e.g. battery power, display area, computational power, memory capacity), however, remain scarce in comparison to their mains-powered and wired counterparts, particularly in the context of the ever greater demands imposed on mobile electronic devices for increased functionality. Thus, despite the growing capabilities of mobile electronic devices, their resources remain relatively limited and therefore valuable.

### GENERAL

According to one aspect of the specification, a method of controlling one or more displays of a mobile electronic device is provided. The method comprises maintaining, in a memory of the mobile electronic device, a plurality of applications; providing, on a first display of the mobile electronic device, an input interface comprising at least one icon associated with a corresponding one of the plurality of applications; and, providing, on a second display of the mobile electronic device, a preview interface comprising a first preview of a first one of the applications.

According to another aspect of the specification, a mobile electronic device is provided, comprising: a memory for maintaining a plurality of applications; a first display; a second display; and, a processor, the processor configured to provide, on the first display, an input interface comprising at least one icon associated with a corresponding one of the plurality of applications; the processor being further configured to provide, on a second display of the mobile electronic device, a preview interface comprising a first preview of a first one of the applications.

According to a further aspect of the specification, a non-transitory computer readable storage medium for storing computer readable instructions for execution by a processor, the computer readable instructions implementing a method comprising: maintaining, in a memory of the mobile electronic device, a plurality of applications; providing, on a first display of the mobile electronic device, an input interface comprising at least one icon associated with a corresponding one of the plurality of applications; and, providing, on a second display of the mobile electronic device, a preview interface comprising a first preview of a first one of the applications.

### BRIEF DESCRIPTIONS OF THE DRAWINGS

Embodiments are described with reference to the following figures, in which:

Figure 1 depicts a mobile electronic device in an open position, according to a non-limiting embodiment;

Figure 2 depicts the mobile electronic device of Figure 1 in a closed position, according to a non-limiting embodiment;

Figure 3 depicts a schematic representation of certain components of the mobile electronic device of Figure 1, according to a non-limiting embodiment;

Figure 4 depicts a method of controlling output devices of the mobile electronic device of Figure 1, according to a non-limiting embodiment;

Figure 5 depicts an exemplary performance of blocks 405-415 of the method of Figure 4, according to a non-limiting embodiment;

Figure 6 depicts an exemplary subsequent performance of blocks 410-415 of the method of Figure 4, according to a non-limiting embodiment; and

Figure 7 depicts a method of controlling output devices of the mobile electronic device of Figure 1, according to another non-limiting embodiment.

### DETAILED DESCRIPTION OF THE EMBODIMENTS

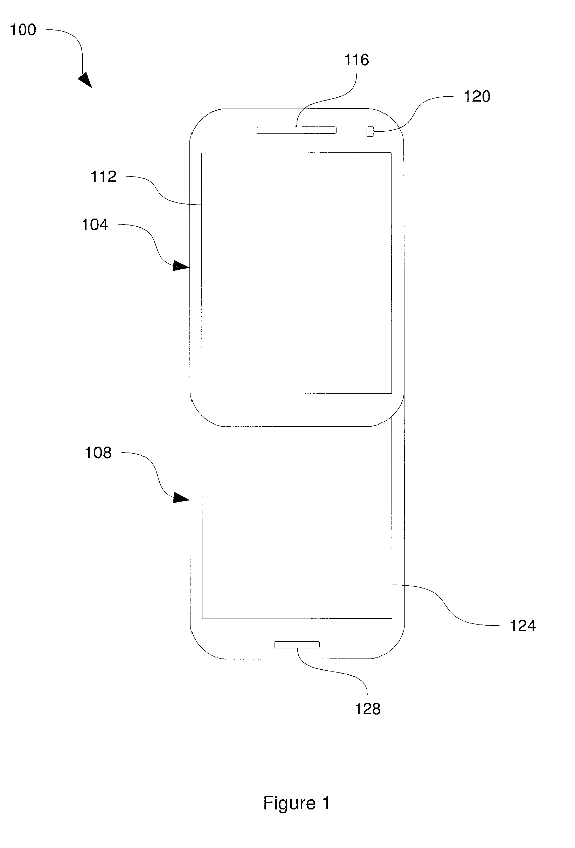

Figure 1 depicts a mobile electronic device 100, which in the present embodiment is based on the operating environment and functionality of a hand-held wireless communication device. It will be understood, however, that mobile electronic device 100 is not limited to a hand-held wireless communication device. Other mobile electronic devices are also contemplated, such as cellular telephones, smart telephones, Personal Digital Assistants ("PDAs"), media or MP3 players, laptop computers and the like.

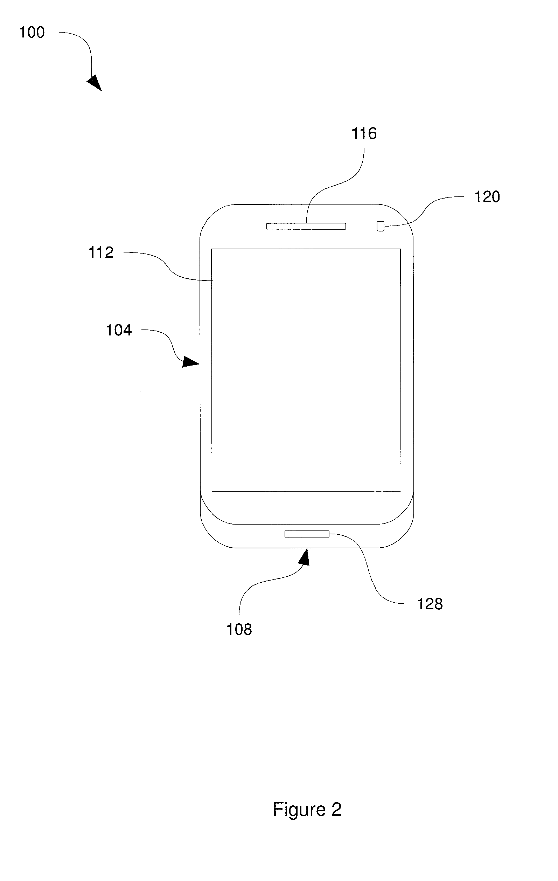

Mobile electronic device 100 includes a housing comprising a first portion 104 (also referred to herein as upper portion 104) slideably coupled with a second portion 108 (also referred to herein as lower portion 108) such that upper and lower portions 104 and 108 are slideably moveable between the "open" position shown in Figure 1 and a "closed" position as shown in Figure 2 (in which upper portion 104 substantially overlays lower portion 108). In other exemplary embodiments (not shown), upper and lower portions 104 and 108 can be coupled via a hinge in a clamshell arrangement. In still other embodiments, upper and lower portions 104 and 108 can be rigidly coupled, such that only one position is available. The housing of mobile electronic device 100 supports the various other components of mobile electronic device 100. Upper and lower portions 104 and 108 of the housing can be constructed of any suitable material, or combination of materials, including without limitation plastics (e.g. Polycarbonate/Acrylonitrile Butadiene Styrene ("PC/ABS")) and metals (e.g. aluminum)..

Upper portion 104 of the housing supports components including, without limitation, an upper display 112 (also referred to herein as display 112), a speaker 116 and an indicator such as a Light Emitting Diode ("LED") indicator 120. Lower portion 108 of the housing supports additional components of mobile electronic device 100 including, without limitation, a lower display 124 (also referred to herein as display 124) and a microphone 128. The terms "upper" and "lower" are used herein simply to distinguish the portions of the housing, as well as displays 112 and 124, from each other for greater clarity, It is contemplated that upper and lower portions 104 and 108 of the housing, and displays 112 and 124 which those portions support, can be arranged in a wide variety of configurations without affecting the functionality of those components, which will be discussed in greater detail below.

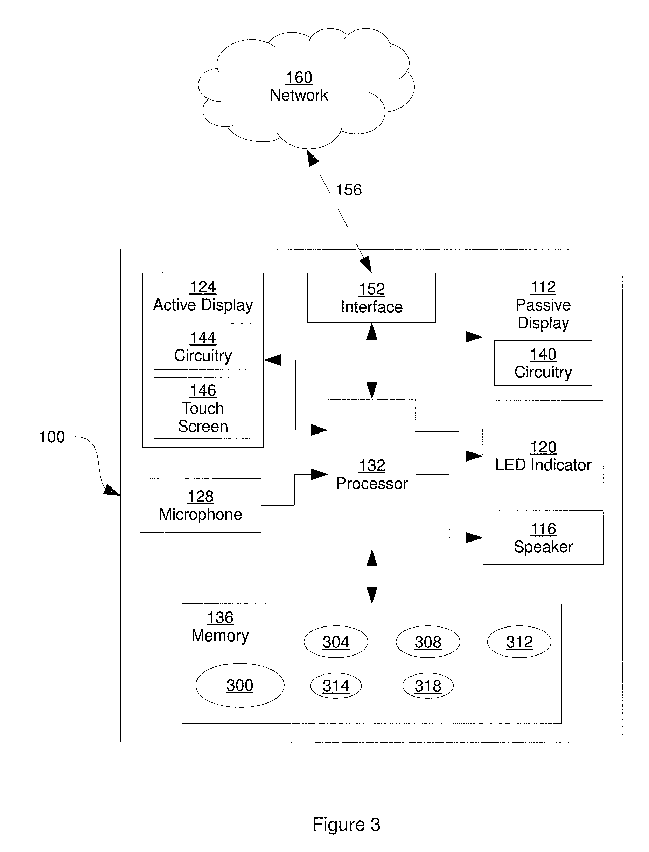

Referring now to Figure 3, a schematic block diagram of certain components of mobile electronic device 100 is depicted. Mobile electronic device 100 includes a processor 132 interconnected with a computer readable storage (i.e. non-transitory) medium such as a memory 136. Memory 136 can be any suitable combination of volatile (e.g. Random Access Memory ("RAM")) and nonvolatile (e.g. read only memory ("ROM"), Electrically Erasable Programmable Read Only Memory ("EEPROM"), flash memory, magnetic computer storage device, or optical disc) memory.

Processor 132 is also interconnected with display 112, speaker 116, LED indicator 120, display 124 and microphone 128. Display 112 and display 124 each include respective display circuitry 140 and 144 controllable by processor 132 for generating representations of data and/or applications maintained in memory 136. Displays 112 and 124 each include a flat panel display (e.g. Liquid Crystal Display (LCD), plasma display, Organic Light Emitting Diode (OLED) display). Thus, circuitry 140 and 144 can each include any suitable combination of display buffers, transistors, LCD cells, plasma cells, phosphors, and the like. Display 124 additionally includes a touch screen 146 integrated with display 124. Touch screen 146 is an input device, configured to receive input and transmit input data to processor 132 representative of that input. Display 124 thus provides both input and output functionality, whereas display 112, in the presently described embodiment, provides only output functionality. In some exemplary embodiments, display 124 can also include a tactile feedback device (not shown) which "clicks" when depressed. Display 124 can also include key-like texturing on the outer surface thereof. It is contemplated that in some exemplary embodiments, display 112 need not be limited solely to output functionality - an input device such as a touch screen (not shown) could be integrated with display 112 in such embodiments.

Mobile electronic device 100 also includes a communications interface 152 interconnected with processor 132. Communications interface 152 allows mobile electronic device 100 to communicate with other devices via a link 156 and a network 160. Network 160 can include any suitable combination of wired and/or wireless networks, including but not limited to a Wide Area Network ("WAN") such as the Internet, a Local Area Network ("LAN"), cell phone networks, WiFi networks, WiMax networks and the like. Link 156 is compatible with network 160. In particular, link 156 can be a wireless link based on Global System for Mobile communications ("GSM"), General Packet Radio Service ("GPRS"), Enhanced Data rates for GSM Evolution ("EDGE"), and the third-generation mobile communication system (3G), Institute of Electrical and Electronic Engineers ("IEEE") 802.11 (WiFi) or other wireless protocols. It will be understood that link 156 can also include any base stations and backhaul links necessary to connect mobile electronic device 100 to network 160. It will be understood that communications interface 152 can therefore be selected for compatibility with link 156 as well as with network 160.

The various components of mobile electronic device 100 are interconnected, for example via a communication bus. In some non-limiting embodiments, mobile electronic device 100 is powered by a battery (not shown), though it will be understood that in other non-limiting embodiments, mobile electronic device 100 can be supplied, in addition to or instead of the battery, with electricity by a wired connection to a wall outlet or other power source,

Mobile electronic device 100 can maintain, in memory 136, an operating system ("OS") 300 and a plurality of applications (it will be understood that an operating system can comprise one or more applications for managing the execution and interaction of "non-OS" applications and the allocation of hardware resources within mobile electronic device 100; for simplicity, these OS applications are collectively referred to herein as OS 300), OS 300 and each application comprise computer-readable instructions for execution by processor 132. Processor 132 can thus be configured to carry out various functions via execution of the above-mentioned computer-readable instructions" Among the functions carried out by processor 132 via execution of those instructions are the control of displays 112 and 124, as will be discussed below in greater detail. As seen in Figure 3, the applications maintained in memory 136 can include a calendar application 304, a messaging application 308 and a browser application 312. The aforementioned examples of applications are non-limiting, and other applications (e.g. an address book or contacts application) are also contemplated.

Mobile electronic device 100 can also maintain, in memory 136, one or more simplified applications or widgets. Each widget comprises computer-readable instructions for execution by processor 132, and corresponds to one of the applications maintained in memory 136. For example, Figure 3 shows a calendar widget 314 and a messaging widget 318. It will be appreciated that although no widget corresponding to browser application 312 is shown, such a widget can be included in other embodiments. In general, widgets 314, 318 are smaller (that is, comprise fewer instructions) than their corresponding applications, and configure processor 132 for generating previews of the corresponding applications, as will be discussed in greater detail below.

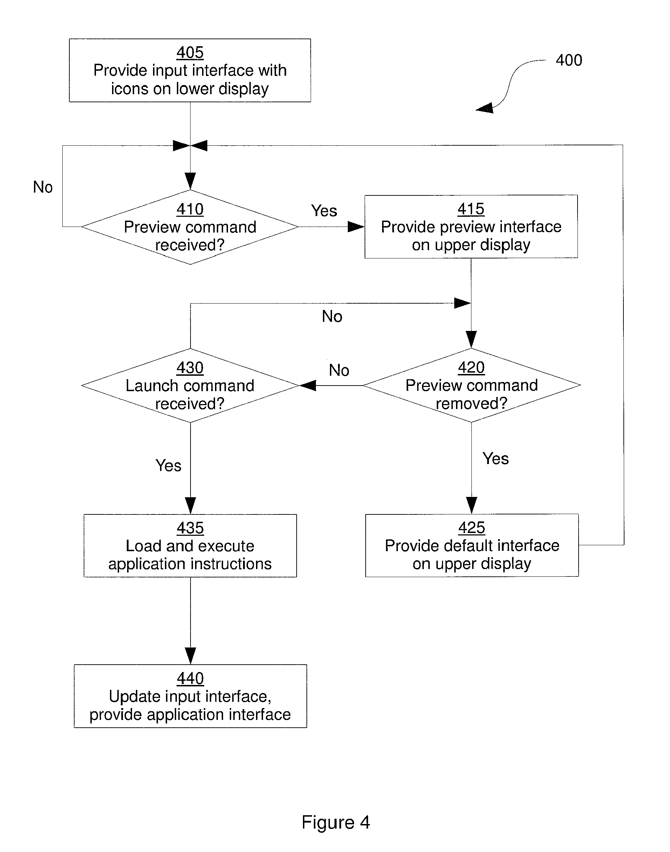

Referring now to Figure 4, a method 400 of controlling displays 112 and 124 will be described. Although the following discussion of method 400 is provided in the context of mobile electronic device 100, it is contemplated that method 400 can also be performed by other devices with different sets of components.

Beginning at block 405, processor 132 is configured (for example, via execution of OS 300) to provide an input interface on lower display 124. In general, the provision on the input interface on lower display 124 provides the functionality of an adaptive keypad. That is, the input interface includes various elements (which may be seen as virtual keys) that are selectable by way of input gestures (e.g.. touch, sliding motions, depression) received at display 124. Those selectable elements can be changed responsive to the operating context of mobile electronic device 100, as will be seen below.

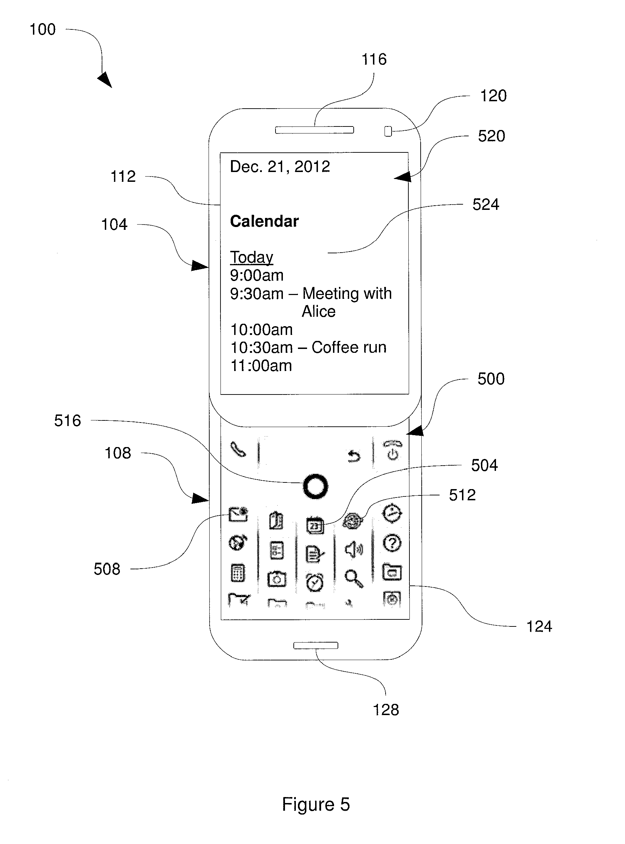

The input interface provided at block 405 includes one or more selectable icons, each selectable icon being associated with a corresponding one of applications 304, 308 and 312 as well as a corresponding one of previews 314 and 318. Turning to Figure 5, an exemplary input interface 500 is shown. Interface 500 includes, for example, a selectable calendar icon 504 associated with calendar application 304 and calendar widget 314, a selectable messaging icon 508 associated with messaging application 308 and messaging widget 318, and a selectable browser icon 512 associated with browser application 312. It is contemplated that visual indicators other than icons can also be used. For example, in some embodiments (not shown) icon 504 can be replaced with the word "calendar" on display 124.

Interface 500 also includes a selectable pointing element, such as a virtual trackball 516. Display 124 is configured to receive input indicative of a "rolling" of virtual trackball 516 (for example, a sliding touch gesture in the vicinity of virtual trackball 516) and to receive input of a "clicking" of virtual trackball 516 (for example, a depression of display 124 in the vicinity of virtual trackball 516). Processor 132 is configured to receive input data representing the above-mentioned inputs from display 124 and to perform certain actions, as will be discussed in greater detail below. As can be seen in Figure 5, input interface 500 includes additional selectable elements which are not discussed herein for simplicity. Such additional selectable elements can be, for example, related to other applications maintained in memory 136.

In performing block 405, processor 132 is configured to retrieve data describing the icons and virtual trackball 516 from memory 136 (such data can be stored within OS 300 or as separate files, not shown, accessible by processor 132 via execution of OS 300). Data describing icon 504, for example, can include an image file of icon 504, data setting the desired position of icon 504 on input interface 500, and the like. Following data retrieval, processor 132 is configured to control display 124 for providing input interface 500 by generating a representation of the retrieved data and transmitting the representation to circuitry 144.

Following the performance of block 405, processor 132 is configured to perform block 410, at which a determination is made as to whether or not input data representative of a preview command relating to one of the applications in memory 136 has been received at processor 132 from display 124. In general, a preview command is a command which causes processor 132 to generate a preview of an application, as will be discussed in greater detail below. In the presently described exemplary embodiment, a preview command is indicative of a first level of selection of an icon of input interface 500. In particular, the first level of selection can be a touch gesture detected by display 124 on or near an icon. Following such a touch gesture, display 124 generates input data representative of the touch gesture and transmits the input data to processor 132.

If the determination at block 410 is negative (that is, processor 132 determines that no preview command has been received), method 400 can wait at block 410 until a preview command is received. If, on the other hand, the determination is affirmative, method 400 proceeds to block 415. For the present exemplary performance of block 410, it will be assumed that processor 132 determines that a preview command has been received in connection with calendar icon 504. Specifically, it will be assumed that input data has been received at processor 132 from display 124 indicative of a first level of selection (e.g. a touch gesture) of icon 504.

At block 415, processor 132 is configured to provide a preview interface on upper display 112 based on the preview command received at block 410. An exemplary preview interface 520 is shown in Figure 5. Preview interface 520 includes a preview of calendar application 304 (referred to herein as a calendar preview 524). It will now be apparent that if a preview command had been received in connection with an icon other than calendar icon 504, preview interface 520 would include a preview of that other application rather than calendar preview 524. Calendar preview 524 is a representation of data associated with calendar application 304. Such data, in the present exemplary embodiment, includes data describing one or more calendar events, such as meeting start and end times, meeting descriptions and the like. Calendar data associated with calendar application 304 is maintained in memory 136 as part of calendar application 304. It is also contemplated that in some embodiments, calendar data can be maintained in memory 136 separately from application 304, such as in a calendar event database (not shown). In still other embodiments, calendar data can be maintained by another device connected to mobile electronic device 100 via network 160.

Processor 132 is configured to provide preview interface 520 at block 415 via the execution of calendar widget 314. In particular, execution of calendar widget 314 configures processor 132 to retrieve relevant calendar data from calendar application 304 (for instance, via Application Programming Interface ("API") calls that allow processor 132 to access the calendar data), to generate a representation of the retrieved calendar data and to transmit the representation to circuitry 140. Of note is that calendar application 304 itself is not executed in order to generate calendar preview 524. Interface 520 including calendar preview 524 thus differs from an interface that would be provided via the execution of calendar application 304 itself in that additional functionality (such as the creation of a calendar event) is not provided via execution of calendar widget 314. Rather, calendar preview 524 is a snapshot (current as of the generation of calendar preview 524) of calendar data for a certain time period. That time period can be predetermined (for example, the next eight hours) and can be configurable.

Referring back to Figure 4, method 400 continues with the performance of block 420. At block 420, processor 132 is configured to determine whether or not the preview command received at block 410 has been removed. In the presently described exemplary embodiment, block 420 thus involves a determination as to whether the touch gesture detected by display 124 on icon 504 is no longer detected. In other words, if the preview command was received as a result of a user's finger touching display 124 over icon 504, the performance of block 420 seeks to determine whether the finger is still touching display 124 over icon 504.

If the determination at block 420 is affirmative (that is, processor 132 determines that the first-level selection of icon 504 is no longer present) then method 400 proceeds to block 425, at which preview interface 520 is replaced with a default interface (not shown). A default interface can have a wide variety of compositions, but for the purposes of the presently described exemplary embodiment, the default interface does not include an application preview. Method 400 then returns to block 410 following the removal of the preview. Thus, following removal of the preview command, a new preview command can be received at the next performance of block 410, causing the provision of a new application preview.

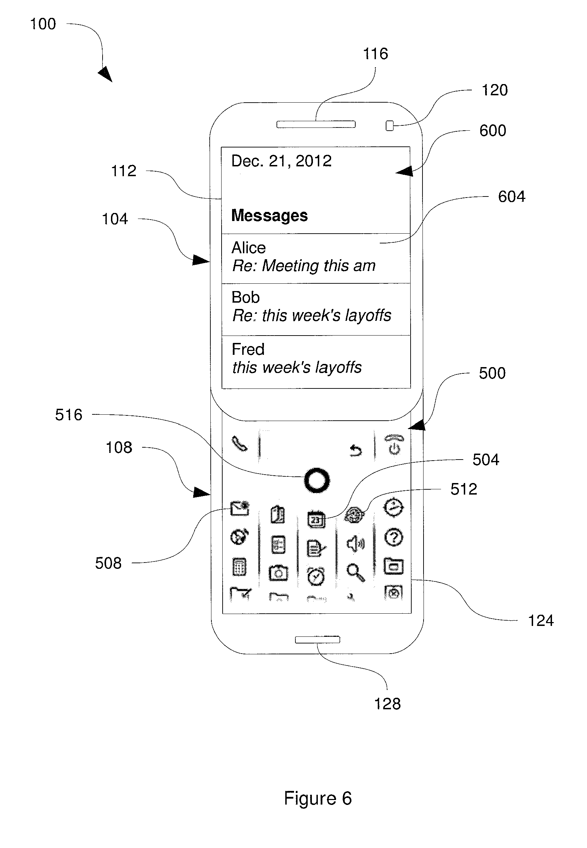

For example, referring briefly to Figure 6, an updated preview interface 600 is shown comprising a messaging preview 604 of messaging application 308 generated by execution of messaging widget 318 during a subsequent performance of blocks 410 and 415. It is therefore contemplated that in some non-limiting embodiments, including the presently described exemplary embodiment, only one application preview is provided on display 112 at any given time.

For the present exemplary performance of method 400, however, it will be assumed that the determination at block 420 is negative; that is, that the preview command initially received at block 410 continues to be received. Method 400 thus proceeds to block 430. At block 430, processor 132 is configured to determine whether input data has been received from display 124 representative of a launch command. In general, a launch command is a command which causes processor 132 to launch the relevant application (rather than the corresponding widget, as described above in connection with preview commands). Input data representative of a launch command can be generated by display 124 in response to detection by display 124 of a second level of selection of an application icon. A second level of selection can be a depression of display 124 while the first level of selection remains in effect. In other words, display 124 detects the first level of selection as a touch of an icon, and detects the second level of selection as a depression of display 124 while the icon is touched (for example, a pressing or clicking of the icon).

When the determination at block 430 is negative, method 400 returns to block 420. Continuing with the present exemplary performance of method 400, however, it will be assumed that the determination at block 430 is positive; that is, that processor 132 has received input data representative of a pressing or clicking of display 124 while icon 504 is touched. Following an affirmative determination at block 430, method 400 advances to block 435.

At block 435, processor 132 is configured to launch the application associated with the launch command received at block 430. In the present exemplary performance of method 400, a second-level selection of calendar icon 504 was received at block 430, and thus processor 132 is configured to load the instructions of calendar application 304 for execution at block 435. Processor 132 is then configured, via execution of calendar application 304 (as opposed to calendar widget 314), to provide functionality such as the creation and editing of calendar events.

Proceeding to block 440, processor 132 is configured, via execution of calendar application 304, to provide an updated input interface. As mentioned above, the elements of input interface 500 can be altered depending on the operating context of mobile electronic device 100. Thus, while executing calendar application 304, input interface 500 can be updated to provide icons and other elements relevant to the execution and functionality of calendar application 304. For example, a icon can be provided on the updated input interface whose selection (either first-level or second-level, as desired) can result in the presentation of an event creation interface on display 112. Processor 132 is also configured, as part of the performance of block 440, to replace preview interface 520 with an application interface for calendar application 304. Such an application interface can include representations of data indicating the additional functionality available to mobile electronic device 100 as a result of the execution of calendar application 304.

It is contemplated that the application launched at block 435 can be terminated at a later time by receipt of an exit command at processor 132. Following such termination, a further performance of method 400 can begin at block 405.

Certain advantages of the methods and apparatus described herein will now be apparent. For example, the provision of application launch icons on display 124 rather than display 112 allows the application previews discussed above to occupy a greater portion of display 112. This, in turn, reduces the need to launch a "full" application in order to access certain information, as the application previews present a greater volume of information. Given that the widgets responsible for the generation of the application previews comprise a smaller number of instructions than their corresponding applications, the execution of those widgets rather than the applications reduces the stress imposed on processor 132 and memory 136 of mobile electronic device 100. This, in turn, can result in extended battery life for mobile electronic device 100. Additionally, given that no additional input is required to "exit" a preview - rather, the removal of the preview command is sufficient to dismiss a preview - the wear and tear on display 124 can be reduced, and the need for further computer-readable instructions in widgets 314 and 318 dealing with the handling of exit commands is rendered unnecessary.

It will also be apparent that a further exemplary advantage stems from the execution of a single widget (and the resulting display of a single preview) at a time. As calendar widget 314 and messaging widget 318 access data related to, respectively, calendar application 304 and messaging application 308, the execution of one widget at a given time rather than two or more can result in a lower number of accesses to memory 136, as well as reduced utilization of processor 132. Further, the provision of multiple previews on display 112 can increase the likelihood of one or more full applications being executed in order to obtain information not available from the previews due to the limited space available to each preview. Other advantages will also occur to those skilled in the art.

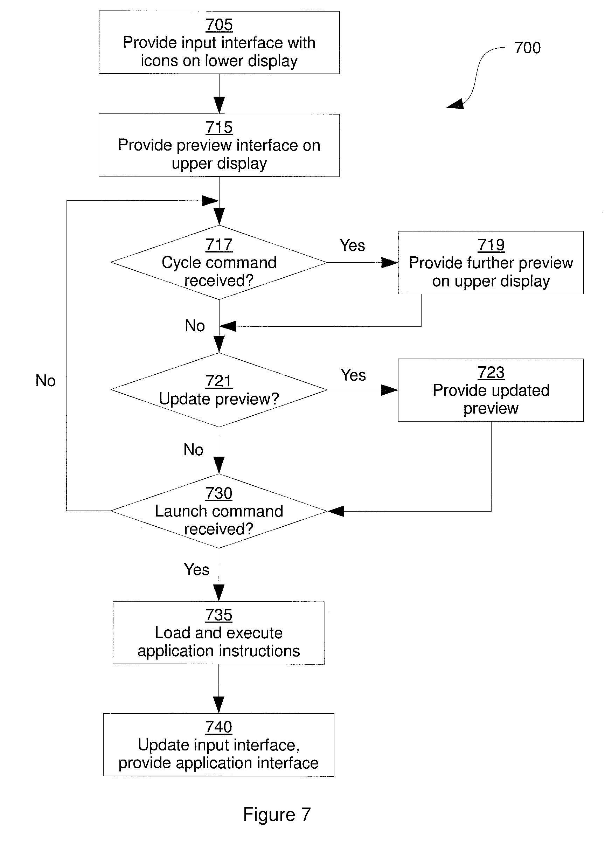

Referring now to Figure 7, a method 700 of controlling displays 112 and 124 will be described, according to another exemplary embodiment Method 700 shares some blocks with method 400. Those shared blocks are identified by similar reference numeral as the blocks of Figure 4, with a leading "7" being used rather than a leading "4". The performance of blocks 705, 715, 730, 735 and 740 is as described above in connection with blocks 405, 415, 430, 435 and 440, respectively.

It will be noted, however, that no preview command is received prior to the performance of block 715 in method 700. In method 700, the preview command can be either omitted, or can be automatically generated by processor 132 executing OS 300. Thus, the preview generated at block 715 is generated automatically, and can be a preview of a configurably predetermined one of the applications maintained in memory 136. The performance of block 715 can be substantially simultaneous with the performance of block 705. For the present exemplary performance of method 700, it will be assumed that at block 715 a preview of calendar application 304 is generated, as discussed above and shown in Figure 5.

Method 700 also includes block 717. At block 717, processor 132 is configured to determine whether input data representative of a cycle command has been received from display 124. A cycle command is a command which causes processor 132 to cycle to a different application preview, as will be discussed below. In this exemplary performance of method 700, a cycle command is indicative of a second-level selection of virtual trackball 516 (that is, a depression or clicking of display 124 while trackball 516 is touched, or subject to first-level selection). It is contemplated that in other non-limiting embodiments, other forms of input can also, or alternatively, be interpreted by processor 132 as cycle commands.

If the determination at block 717 is affirmative, method 700 advances to block 719. At block 719, processor 132 is configured to update the preview interface on upper display 112 with a second application preview. As with the default application preview generated at block 715, the application to be previewed at block 719 can be configurable. For the present exemplary performance of method 700 it will be assumed that processor 132 is configured to generate a preview of messaging application 308 at block 719. Thus, referring again to Figure 6, updated preview interface 600 is provided on display 112, including messaging preview 604. Of note is that calendar preview 524 no longer appears on display 112, having been replaced with messaging preview 604.

Messaging preview 604 is generated by processor 132 via the execution of messaging widget 318, which configures processor 132 to retrieve messaging data from messaging application 308 without the need to execute messaging application 308. As with calendar preview 524, messaging preview 604 is a snapshot, current as of its generation by processor 132, of relevant messaging data (such as an email inbox maintained at mobile electronic device 100).

Referring back to Figure 7, following the performance of block 719, or following a negative determination at block 717, method 700 proceeds to block 721. At block 721, processor 132 is configured to determine whether the preview currently rendered on display 112 is to be updated. It will now be apparent to those skilled in the art that during execution of, for example, messaging application 308, a messaging interface provided on display 112 can be updated many times per second, such that events (such as the receipt of a new message) are reflected on the interface substantially immediately. In connection with the execution of messaging widget 318 and other widgets, however, it is contemplated that the interface is not updated as frequently.. Rather, as a result of the determination at block 721, the previews generated by the widgets are updated only in response to certain conditions being met. Such conditions can be the occurrence of an event (e.g.. the receipt of a new message, the deletion of a message, and the like). In other embodiments, the conditions can include a configurable time period. In such embodiments, processor 132 can determine at block 721 whether the time period (for example, ten seconds) has expired. If the time period has expired, the determination at block 721 is "yes". The determination at block 721 can also include a determination of whether input data has been received from display 124. For example, while application previews do not provide the same level of functionality as corresponding full applications, such previews can, in some embodiments, provide limited functionality such as scrolling. Thus, referring briefly to Figure 5, calendar preview 520 can be scrolled upwards in order to display a preview of the remainder of the day (i.e. after 11:00am). Returning to Figure 7, at block 721 processor 132 can therefore be configured to determine if input data representative of, for example, a first-level selection of virtual trackball 516 such as sliding gesture over virtual trackball 516, has been received from display 124.

Following an affirmative determination at block 722, method 700 proceeds to block 723. At block 723, an updated preview of the same application currently being previewed on display 112 is generated. The generation of the updated preview is as described in connection with block 415 of method 400. If, on the other hand, the determination at block 721 is negative, method 700 proceeds to block 730..

It is contemplated that the update functionality described above in connection with blocks 721 and 723 can be extended to method 400 (for example, between the performance of blocks 415 and 420). It will now be apparent to those skilled in the art that blocks 721 and 723 allow for further reductions in the utilization of processor 132 and circuitry 140 (and any accompanying increases in battery life) by allowing for a reduction in the frequency with which processor 132 transmits representations to circuitry 140.

It is noted that following a negative determination at block 730, which is otherwise as described above in connection with block 430, method 700 returns to block 717 to await a cycle command. It is contemplated that for each performance of blocks 717 and 719, a preview can be generated for a new application until all the "previewable" applications (that is, those for which a corresponding widget is maintained in memory 136) have been cycled through. Following such a complete cycle, the performance of block 719 can result in the generation of a preview for the first application in the cycle. It is also contemplated that the applications in the cycle, as well as their order, can be configured. For example, an editable configuration file can be maintained in memory 136 which specifies which widgets to execute at each successive performance of block 719, and in which order.

Those skilled in the art will appreciate that in some embodiments, the functionality of processor 132 as configured by applications 304, 308 and 312 as well as widgets 314 and 318, may be implemented using pre-programmed hardware or firmware elements (e.g., application specific integrated circuits (ASICs), EEPROMs, etc.), or other related components.

Persons skilled in the art will appreciate that there are yet more alternative implementations and modifications possible for implementing the embodiments, and that the above implementations and examples are only illustrations of one or more embodiments. For example, in some further exemplary embodiments, application previews can provide limited functionality, such as scrolling to view other portions of the previews. The scope, therefore, is only to be limited by the claims appended hereto.

## Claims

1. A method (400, 700) of controlling one or more displays (112, 124) of a mobile electronic device (100), the method comprising:
maintaining, in a memory (136) of the mobile electronic device (100), a plurality of applications (304, 308, 312);
providing (405, 705), on a first display (124) of the mobile electronic device, an input interface (500) comprising at least one icon (504, 508, 512) associated with a corresponding one of the plurality of applications; and,
providing (415, 715), on a second display (112) of the mobile electronic device (100), a preview interface (520) comprising a first preview (524) of a first one (304) of the applications.

2. The method (400, 700) of claim 1, wherein the first preview (524) is the only preview provided in the preview interface (520).

3. The method (400, 700) of claim 1 or claim 2, wherein providing the preview interface comprises executing a widget (314) corresponding to the first application (304).

4. The method (400) of any one of claims 1 to 3, further comprising:
prior to providing the preview interface, receiving (410) a preview command relating to one of the plurality of applications.

5. The method (400) of claim 4, further comprising:
determining (420) whether the preview command has been removed; and,
when the determination is affirmative, providing (425) a default interface without a preview of an application on the second display (112).

6. The method (700) of any one of claims 1 to 5, further comprising:
receiving (717) input data representing a cycle command; and
providing (719), on the second display, an updated preview interface comprising a second preview (604) of a second one (308) of the applications.

7. The method of claim 6, wherein providing the updated preview interface comprises executing a second widget (318) corresponding to the second application (308).

8. A mobile electronic device (100), comprising:
a memory (136) for maintaining a plurality of applications (304, 308, 312);
a first display (124);
a second display (112); and,
a processor (132), the processor configured to provide, on the first display (124), an input interface (500) comprising at least one icon (504, 508, 512) associated with a corresponding one of the plurality of applications;
the processor (132) being further configured to provide, on a second display (112) of the mobile electronic device (100), a preview interface (520) comprising a first preview (524) of a first one (304) of the applications.

9. The mobile electronic device (100) of claim 8, wherein the first preview (524) is the only preview provided in the preview interface.

10. The mobile electronic device (100) of claim 8 or claim 9, the processor (132) further being configured to provide the preview interface (520) by executing a widget (314) corresponding to the first application (304).

11. The mobile electronic device (100) of any one of claims 8 to 10, the processor (132) further being configured, prior to providing the preview interface (520), to receive a preview command relating to one of the plurality of applications.

12. The mobile electronic device (100) of claim 11, the processor being further configured to determine whether the preview command has been removed; and,
when the determination is affirmative, to provide a default interface without a preview of an application on the second display (112).

13. The mobile electronic device (100) of any one of claims 8 to 12, the processor (132) being further configured to receive input data representing a cycle command; and to provide, on the second display (112), an updated preview interface (600) comprising a second preview (604) of a second one of the applications (308).

14. The mobile electronic device (100) of claim 13, the processor being further configured to provide the updated preview interface (600) by executing a second widget (318) corresponding to the second application (308).

15. A non-transitory computer readable storage medium (136) for storing computer readable instructions for execution by a processor (132), the computer readable instructions implementing the method (400, 700) of any one of claims 1 to 7.

## Amended claims

### Amended claims in accordance with Rule 137(2) EPC.

**1.** A method (400, 700) of controlling one or more displays (112, 124) of a mobile electronic device (100), the method comprising:
maintaining, in a memory (136) of the mobile electronic device (100), a plurality of applications (304, 308, 312);
providing (405, 705), on a first display (124) of the mobile electronic device, an input interface (500) comprising, at least one icon (504, 508, 512) associated with a corresponding one of the plurality of applications; and,
providing (415, 715), on a second display (112) of the mobile electronic device (100), a preview interface (520) comprising a first preview (524) of a first one (304) of the applications,
wherein providing the preview interface comprises executing a widget (314) distinct from and corresponding to the first application (304).

**2.** The method (400, 700) of claim 1, wherein the first preview (524) is the only preview provided in the preview interface 520).

**3.** The method (400, 700) of claim 1 or claim 2, wherein the Widget (314) corresponding to the first application (304) comprises fewer instructions than the first application (304).

**4.** The method (400) of any of claim 1 to 3, further comprising:
prior to providing the preview interface, receiving (410) a preview command relating to one of the plurality of applications.

**5.** The method (400) of claim 4, further comprising:
determining (420) whether the preview command has been removed; and,
when the determination is affirmative, providing (425) a default interface without a preview of an application on the second display (112).

**6.** The method (700) of any one of claims 1 to 5, further comprising:
receiving (717) input data representing a cycle command; and
providing (719), on the second display, an updated preview interface comprising a second preview (604) of a second one (308) of the applications;

**7.** The method of claim 6, wherein providing the updated preview interface comprises executing a second Widget (318) corresponding to the second application (308).

**8.** A mobile electronic device (100), comprising:
a memory (136) for maintaining a plurality of applications (304, 308, 312);
a first display (124);
a second display (112); and,
a processor (132), the processor configured to provide, on the first display (124), an input interface (500) comprising at least one icon (504, 508, 512) associated with a corresponding one of the plurality of applications;
the processor (132) being further configured to provide, on a second display (112) of the mobile electronic device (100), a preview interface (520) comprising a first preview (524) of a first one (304) of the applications, by executing a widget (314) distinct from and corresponding to the first application (304).

**9.** The mobile electronic device (100) of claim 8, wherein the first preview (524) is the only preview provided in the preview interface.

**10.** The mobile electronic device (100) of claim 8 or claim 9, wherein the Widget (314) corresponding to the first application (304) comprises fewer instructions than the first application (304).

**11.** The mobile electronic device (100) of any one of claims 8 to 10, the processor (132) further being configured, prior to providing the preview interface (520), to receive a preview command relating to one of the plurality of applications.

**12.** The mobile electronic device (100) of claim 11, the processor being further configured two determine whether the preview command has been removed; and,
when the determination is affirmative, to provide a default interface without a preview of an application on the second display (112).

**13.** The mobile electronic device (100) of any one of claims 8 to 12, the processor (132) being further configured to receive input data representing a cycle command; and to provide, on the second display (112), an updated preview interface (600) comprising a second preview (604) of a second one of the applications (308).

**14.** The mobile electronic device (100) of claim 13, the processor being further configured to provide the updated preview interface (600) by executing a second widget (318) corresponding to the second application (308).

**15.** A non-transitory computer readable storage medium (136) for storing computer readable instructions for execution by a processor (132), the computer readable instructions implementing the method (400, 700) of any one of claims 1 to 7.
